# EUROPÄISCHE PATENTSCHRIFT

(11) **EP 2 131 628 B1**
(45) Veröffentlichungstag und Bekanntmachung des Hinweises auf die Patenterteilung: **02.08.2017**
(21) Anmeldenummer: 09161312.5
(22) Anmeldetag: 28.05.2009
(51) Int. Cl.: H05B 33/08, H05B 37/02

(54) **Signalgeber**
Signal issuer
Emetteur de signal

(30) Priorität: 05.06.2008 DE 102008027632
(43) Veröffentlichungstag der Anmeldung: 09.12.2009
(73) Patentinhaber: Siemens Aktiengesellschaft, 80333 München (DE)
(72) Erfinder: Berg, Eike, 12203, Berlin (DE); Burgaß, Stefan, 10315, Berlin (DE); Eckl, Rolf, 12305, Berlin (DE); Frost, Uwe, 12555, Berlin (DE); Pöpplow, Norbert, 15732, Eichwalde (DE); Zabel, Michael, 12685, Berlin (DE); Zimmermann, Dirk, 13053, Berlin (DE)

(56) Entgegenhaltungen:
- EP-A2- 1 722 608
- US-A1- 2004 212 309

## Beschreibung

Die Erfindung betrifft einen Signalgeber, der eine LED-Lichtquelle ansteuert und mit einem Stellwerk zusammenwirkt.

Lichtsignale oder Leuchtzeichen auf der Basis von LEDs-lichtemittierende Dioden - anstelle von Glühlampen werden in vielen Bereichen, insbesondere in der Eisenbahnsignaltechnik zunehmend angewendet. LEDs sind vergleichsweise preiswert, langlebig und lichtstark. Schwierig ist der Einsatz von LEDs jedoch dort, wo ohne Änderungen einer vorhandenen Überwachungseinrichtung die Glühlampen durch LEDs ersetzt werden sollen. Besonders gilt dieses für Lichtsignalschaltungen der Eisenbahn, bei welchen die ordnungsgemäße Funktion in der Regel durch eine signaltechnisch sichere Strommessung stellwerkseitig überwacht wird. Um diese Überwachungseinrichtung ohne Änderung weiter verwenden zu können, muss die Signalgeberstrom/Betriebsspannungs-Kennlinie des LED-Lichtsignals annähernd an die des Glühlampen-Lichtsignals angepasst werden. Eine weitere Besonderheit bei Eisenbahn-Lichtsignalen ist die Signalisierung außerhalb von Tunneln oder bei Umgebungsbedingungen mit nicht konstanten Lichtverhältnissen. Hier ist schaltungstechnisch eine Absenkung der Lichtleistung, d. h. der Betriebsspannung, für den Nachtbetrieb gegenüber dem Tagbetrieb zu realisieren.

Ein bekannter Signalgeber ist in der EP 1 722 608 A2 beschrieben.

Der Erfindung liegt die Aufgabe zugrunde, einen Signalgeber der gattungsgemäßen Art anzugeben, der hohen Sicherheitsanforderungen und/oder Verfügbarkeitsanforderungen genügt und der problemlos an entsprechende Vorgaben anpassbar ist.

### Erfindungsgemäß wird die Aufgabe durch den Gegenstand von Patentanspruch 1 gelöst

Durch konsequent modulare Bauform ergibt sich die Möglichkeit, die einzelnen Funktionseinheiten, nämlich Betriebsarterfassung, EMV-Schutzeinrichtung, Signalgenerator/Treiber-Baugruppe, Kennlinienanpassung, Vergleicher und Messwerterfassung, jeweils separat an unterschiedliche Sicherheitsanforderungen und Verfügbarkeitsanforderungen anzupassen. Die Funktionseinheiten sind dabei signaltechnisch sicher voneinander getrennt, beispielsweise mittels Sicherungen oder Informationsübertragung via Optokoppler. Auf diese Weise wird Rückwirkungsfreiheit zwischen den Funktionseinheiten erreicht, so dass jede einzelne Funktionseinheit separat konzipiert und ggf. erweitert werden kann. Die Funktionseinheiten erfüllen dabei folgende Teilaufgaben des Signalgebers:
Die EMV- elektromagnetische Verträglichkeit -Schutzeinrichtung eliminiert unzulässige Fremdspannungen im Eingangssignal. Über dieses Eingangssignal wird sowohl die Energieversorgung des Signalgebers als auch die Betriebsartinformation, d. h. die Statusrückmeldung, übertragen.

Die Betriebsarterfassung extrahiert aus dem Eingangssignal die stellwerkseitig vorgegebene Betriebsartinformation, insbesondere bezüglich Tag- oder Nachtbetrieb, und stellt diese Information sowohl der Signalgenerator/Treiber-Baugruppe als auch dem Vergleicher zur Verfügung.

Die Signalgenerator/Treiber-Baugruppe wertet die Information der Betriebsarterfassung aus und steuert den LED-Treiber der Signalgenerator/Treiber-Baugruppe entsprechend dieser Information, wodurch der LED-Treiber die Bestromung, d. h. die Speisebedingungen, für die LED-Lichtquelle einstellt. Die LED-Lichtquelle besteht dabei aus einer beliebigen Parallel- oder/und Reihenschaltung einzelner LEDs.

Die Messwerterfassung erfasst die optischen und/oder elektrischen Betriebswerte der LED-Lichtquelle und bereitet diese auf.

Die Auswertung bewertet die von der Messwerterfassung ermittelten Betriebswerte, beispielsweise bezüglich LED-Strom oder Spannung, Farbort, Lichtstärke, Betriebsstunden, und regelt die Signalgenerator/Treiber-Baugruppe ggf. nach.

Der Vergleicher vergleicht den Informationsgehalt der Messwerterfassung mit der Soll-Betriebsart aus der Betriebsarterfassung und meldet eine eventuelle Abweichung via EMV-Schutzeinrichtung an das Stellwerk.

Die Kennlinienanpassung ermöglicht die Kompatibilität mit der stellwerkseitigen Sicherheitstechnik, indem die elektrischen Eigenschaften einer Glühlampe nachgebildet werden.

Durch die Auswertung des Rückkanals, d. h. der Ist-Betriebsart, im Stellwerk kann ein Fehler im Signalgeber sicher offenbart werden, da bei fehlerfreiem Signalgeber die Information des Rückkanals mit der Information aus der Ansteuerung, d. h. der Soll-Betriebsart, übereinstimmt. Eine Abweichung zwischen Ansteuerung und Rückkanalauswertung signalisiert somit einen Defekt im Signalgeber oder in der Übertragungsstrecke.

Zur Sicherstellung der Funktion müssen Fehler der Funktionseinheiten des Signalgebers unterscheidbar sein und über die Statusrückmeldung nach außen bzw. an das Stellwerk signalisiert werden. Folgende Fehlerarten können lokalisiert werden:
Ein Fehler in der Betriebsarterfassung hat eine von der Vorgabe abweichende Betriebsart zur Folge. Diese abweichende Betriebsart wird über den Vergleicher an das Stellwerk gemeldet.

Ein Fehler in der Signalgenerator-Treiber-Baugruppe hat direkten Einfluss auf die Bestromung der LED-Lichtquelle. Unabhängig von der Kompensation durch die Regelung wird die Abweichung zwischen den Zustandsinformationen aus der Betriebsarterfassung und der Messwerterfassung durch den Vergleicher erkannt und an das Stellwerk gemeldet.

Ein Fehler der LED-Lichtquelle oder der Messwerterfassung hat direkten Einfluss auf das Ausgangssignal der Messwerterfassung. Unabhängig von der Kompensation durch die Regelung wird auch hier die Abweichung zwischen den Zustandsinformationen aus der Betriebsarterfassung und der Messwerterfassung durch den Vergleicher erkannt und an das Stellwerk gemeldet.

Ein Einzelfehler im Vergleicher hat keinen Einfluss auf die sicherheitstechnischen Funktionen des Signalgebers, da die optischen und elektrischen Eigenschaften auch bei defektem Vergleicher gegeben sind. Ein Defekt im Vergleicher wird jedoch über einen Prüfzyklus an das Stellwerk gemeldet und dadurch offenbart.

Durch die einkanalige Ansteuerung der LED-Lichtquelle mittels der Signalgenerator/Treiber-Baugruppe können die Betriebsbedingungen der LED-Lichtquelle genau definiert werden. Dazu ist nicht notwendigerweise auch eine Rückkopplung durch die Auswertung notwendig. Die folgenden Parameter der LED-Lichtquelle sind dabei von besonderer Bedeutung:
- Lichtstärke; durch die zentrale Ansteuerung können die unterschiedlichen Lichtstärken für die jeweilige Betriebsart, insbesondere Tag- oder Nachtbetrieb, genau definiert werden.
- Temperaturkompensation; durch eine Temperaturmessung auf dem Signalgeber und eine geeignete Ansteuerung können die physikalischen Effekte im LED-Halbleiter kompensiert werden, so dass eine gleichmäßige Lichtstärke über den gesamten Temperaturbereich erreichbar wird.
- Farbstabilität; durch genaue Ansteuerung mit konstantem Strom für jede Betriebsart kann eine hohe Genauigkeit des Farbortes erreicht werden.
- Degradationskompensation; durch Erfassung der Betriebszeit des Signalgebers kann ein Ausgleich der Degradation vorgesehen werden, so dass eine gleichmäßige Lichtstärke über die gesamte Lebensdauer der LED-Lichtquelle erreicht werden kann.

Durch die Auswertung können die physikalischen Eigenschaften der LEDs und damit des Signalgebers direkt erfasst und ausgeregelt werden. Folgende Effekte lassen sich über die Regelung kompensieren:
- Lichtstärkeregelung; durch Messung der Lichtstärke können physikalische Effekte aufgrund von Temperatur oder Degradation/Alterung ausgeglichen werden.
- Farbortregelung; durch Messung des Farbortes können physikalische Effekte aufgrund von Temperatur oder Degradation/Alterung ausgeglichen werden.
- LED-Leistungsregelung; Durch Messung von LED-Strom und/oder LED-Spannung können Veränderungen im Signalgeberstrom ausgeglichen werden.

Die Ergebnisse der Auswertung können zusätzlich für eine Bewertung der LED-Lichtquelle, z. B. hinsichtlich einer Restlebensdauerprognose, verwendet werden.

Vorteilhafte Ausgestaltungen des erfindungsgemäßen Signalgebers sind in den Unteransprüchen gekennzeichnet und werden nachfolgend anhand figürlicher Darstellungen näher erläutert. Es zeigen:
- Figur 1: drei Varianten des Grundkonzeptes eines signaltechnisch sicheren Signalgebers,
- Figur 2: das Grundkonzept mit mehrkanaliger LED-Ansteuerung durch mehrkanalige LED-Treiber,
- Figur 3: das Grundkonzept mit mehrkanaliger LED-Ansteuerung durch eine mehrkanalige Signalgenerator/Treiber-Baugruppe,
- Figur 4: das Grundkonzept mit mehrkanaliger Betriebsarterfassung und mehrkanaligem Vergleicher,
- Figur 5: das Grundkonzept gemäß Figur 4 mit mehrfacher Kennlinienanpassung,
- Figur 6: das Grundkonzept gemäß Figur 4 mit gevoteter Betriebsarterfassung,
- Figur 7: das Grundkonzept gemäß Figur 5 mit mehrkanaliger LED-Ansteuerung gemäß Figur 3,
- Figur 8: das Grundkonzept mit mehrkanaliger Messwerterfassung und Auswertung,
- Figur 9: das Grundkonzept in einer ersten eigensicheren Ausführungsform,
- Figur 10: das Grundkonzept in einer zweiten eigensicheren Ausführungsform und
- Figur 11: das Grundkonzept in mehrkanaliger eigensicherer Ausführungsform.

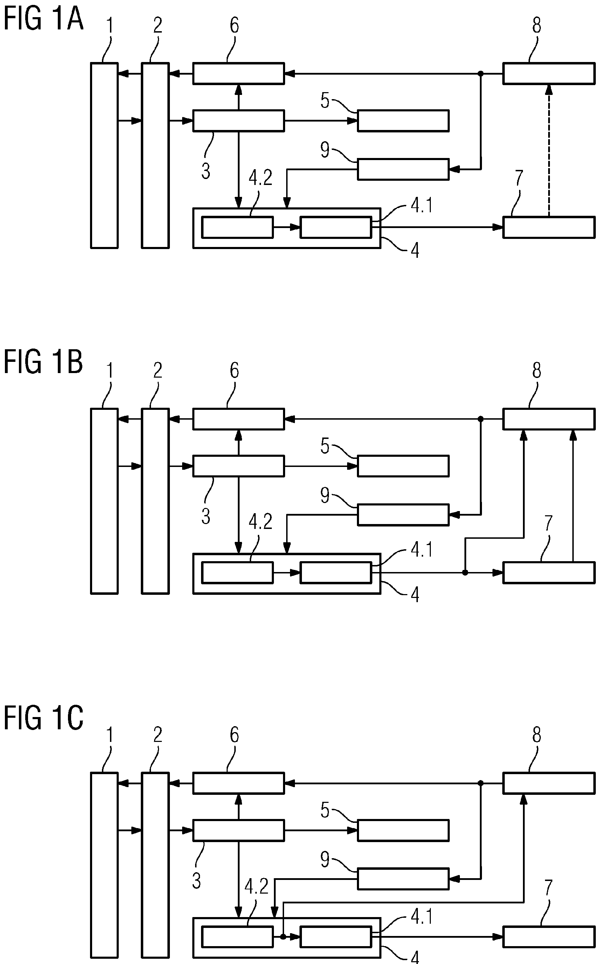

Die Figuren 1a, 1b und 1c veranschaulichen die wesentlichen Funktionseinheiten eines signaltechnisch sicheren Signalgebers. Ein Stellwerk 1 ist über eine EMV-Schutzeinrichtung 2 mit einer Betriebsarterfassung 3 verbunden. Die Betriebsarterfassung 3 beaufschlagt eine Signalgenerator/Treiber-Baugruppe 4, eine Kennlinienanpassung 5 und einen Vergleicher 6. Die Signalgeber/Treiber-Baugruppe 4 steuert die Bestromung einer LED-Lichtquelle 7, deren Parameter, beispielsweise bezüglich Lichtstärke, Bestromung, Farbort oder Betriebsstunden, von einer Messwerterfassung 8 gemessen werden. Diese Messwerte sind dem Vergleicher 6 und einer Auswertung 9 zugeführt, wobei mittels der Auswertung 9 die Signalgenerator/Treiber-Baugruppe 4 derart nachgeregelt wird, dass der gemessene Istwert mit dem vom Stellwerk 1 über die Betriebsarterfassung 3 vorgegebenen Sollwert für die oben genannten LED-Parameter übereinstimmt.

Gemäß Figur 1a ist die Messwerterfassung 8 zur Messung optischer Parameter, vorzugsweise der Lichtstärke, der LED-Lichtquelle 7 konzipiert, während gemäß Figur 1b das elektrische Ausgangssignal, vorzugsweise der Strom- oder Spannungswert, der Signalgenerator/Treiber-Baugruppe 4 und gemäß Figur 1c das dem LED-Treiber 4.1 von dem Signalgenerator 4.2 der Signalgenerator/Treiber-Baugruppe 4 gemessen wird.

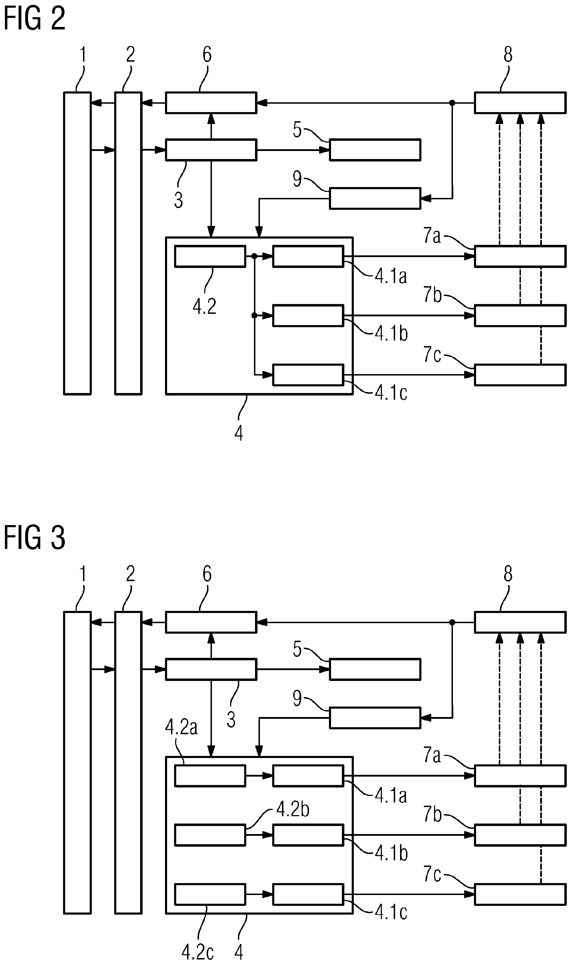

Dieses Grundkonzept wird gemäß Figur 2 dadurch abgewandelt, dass der LED-Treiber 4.1 mehrkanalig ausgeführt ist, wobei jeder Kanal 4.1a, 4.1b, 4.1c einzelne LEDs 7a, 7b, 7c der LED-Lichtquelle 7 ansteuert. Die Messwerterfassung 8 kann - wie auch bei allen folgenden Ausführungsvarianten - für optische Überwachung gemäß Figur 1a oder für elektrische Überwachung gemäß Figur 1b oder 1c ausgelegt sein.

Die Mehrkanaligkeit des LED-Treibers 4.1 gemäß Figur 2 ist in Figur 3 auf die gesamte Signalgenerator/Treiber-Baugruppe 4 erweitert, indem jeder Treiberkanal 4.1a, 4.1b, 4.1c mit einem Signalgeneratorkanal 4.2a, 4.2b, 4.2c verbunden ist.

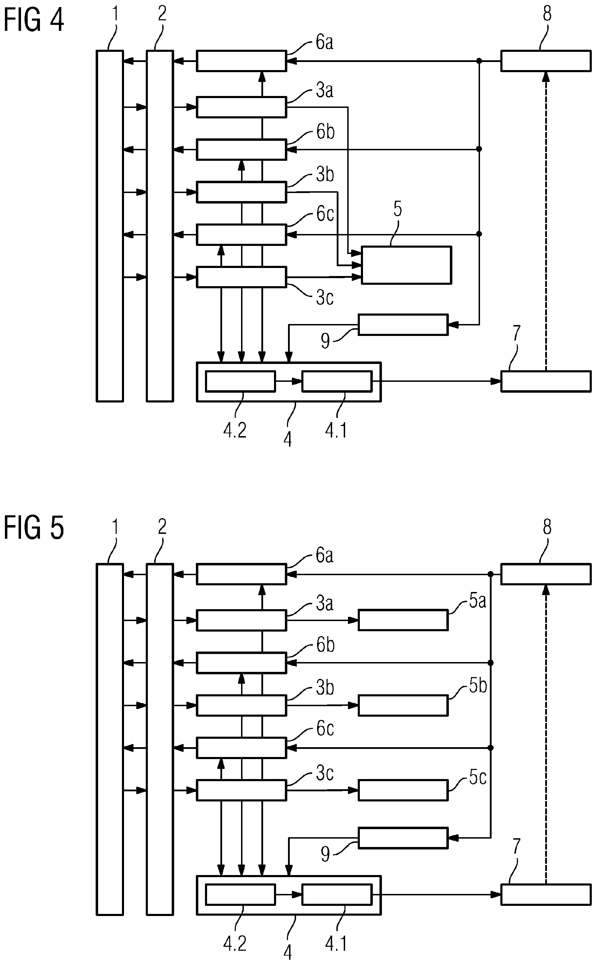

Auch die Betriebsarterfassung 3 kann mehrkanalig 3a, 3b, 3c erfolgen und mit zugeordneten Vergleicherkanälen 6a, 6b, 6c verbunden sein, wie Figur 4 zeigt. Jeder Kanal 3a, 3b, 3c der Betriebsarterfassung 3 wird dabei von dem Stellwerk 1 mit Vorgaben versorgt und jeder Vergleicherkanal 6a, 6b, 6c überträgt die Vergleichsergebnisse an das Stellwerk 1 zurück.

Die Auswahl der Eingangssignale der Kennlinienanpassung 5 und der Signalgenerator/Treiber-Baugruppe 4 ist dabei frei wählbar. Durch die mehrkanalige Betriebsarterfassung 3a, 3b, 3c mit mehrkanaligem Vergleich 6a, 6b, 6c kann je nach Auswertung der Statusrückmeldungen durch das Stellwerk 1 eine Erhöhung der Sicherheit oder der Verfügbarkeit erreicht werden.

Die in Figur 5 dargestellte Ausführungsform ermöglicht eine erhöhte Verfügbarkeit, indem gegenüber Figur 4 zusätzlich auch die Kennlinienanpassung 5 mehrkanalig 5a, 5b, 5c ausgeführt ist.

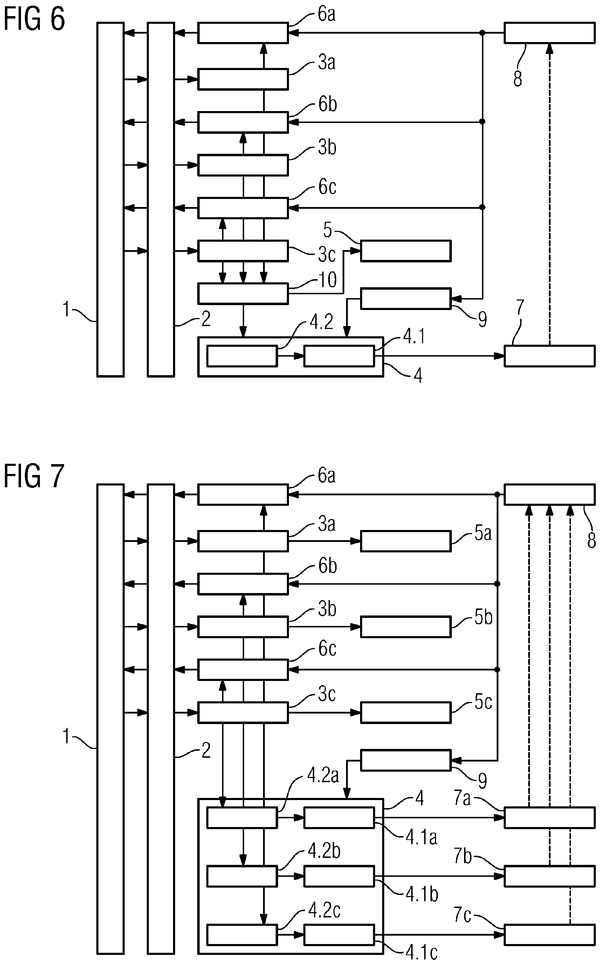

Ausgehend von Figur 4 wird gemäß Figur 6 ein Voter 10 für die Auswertung der Kanalinformationen 3a, 3b, 3c der Betriebsarterfassung 3 verwendet. Dadurch kann die Kennlinienanpassung 5 einkanalig ausgeführt sein, wobei die hohe Verfügbarkeit gemäß Figur 5 erhalten bleibt.

Figur 7 veranschaulicht eine hoch verfügbare und hohen Sicherheitsanforderungen genügende Ausführungsform, bei der die Mehrkanaligkeit bezüglich Betriebsarterfassung 3a, 3b, 3c, Vergleicher 6a, 6b, 6c und Kennlinienanpassung 5a, 5b, 5c mit der Mehrkanaligkeit gemäß Figur 3 bezüglich der Signalgenerator/Treiber-Baugruppe 4.1a/4.2a, 4.1b/4.2b, 4.1c/4.2c kombiniert ist.

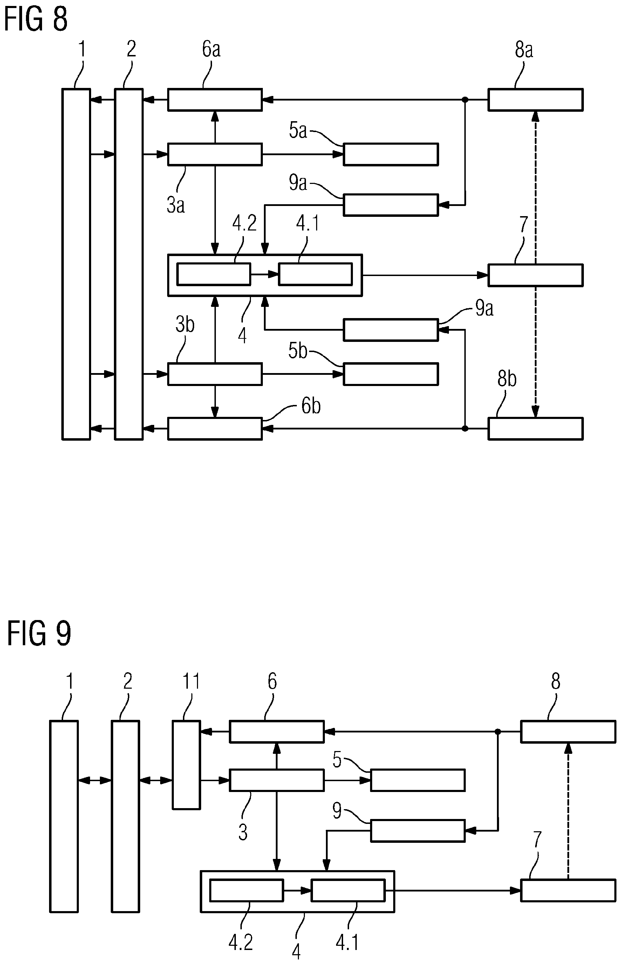

Figur 8 veranschaulicht eine Ausführungsform eines signaltechnisch sicheren Signalgebers mit mehrkanaliger Messwerterfassung 8a, 8b und mehrkanaliger Auswertung 9a, 9b.

Zum Ausbau des signaltechnisch sicheren Signalgebers zu einem signaltechnisch sicheren und eigensicheren Signalgebers ist gemäß Figur 9 ein zusätzlicher Abschalter 11 der EMV-Schutzeinrichtung 2 nachgeschaltet. Der Abschalter 11 bewertet das Ausgangssignal des Vergleichers 6 und trennt bei Abweichung dieses Istsignals von dem stellwerkseitig vorgegebenen Sollsignal den Signalgeber vom Stellwerk 1. Durch diese Trennung wird ein Fehler bezüglich der Ansteuerung oder der Funktionsweise des Signalgebers offenbart.

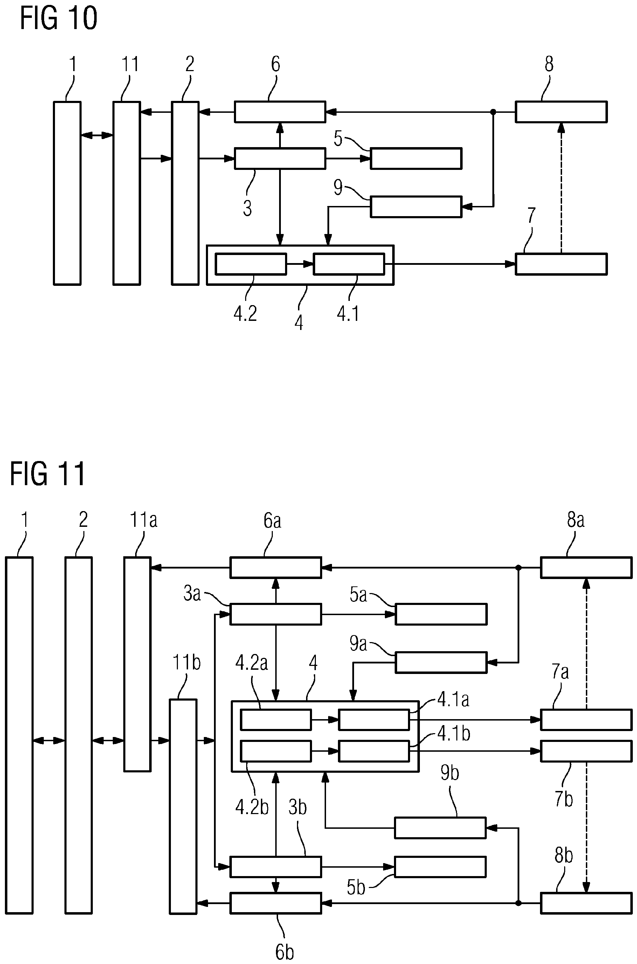

Die Position des Abschalters 11 ist dabei variabel und kann, wie Figur 10 zeigt, beispielsweise auch der EMV-Schutzeinrichtung 2 vorgeschaltet sein.

Denkbar sind auch Kombinationen der eigensicheren Bauform mit mehrkanaligen Varianten oder parallelen Funktionsgruppen nach den Figuren 2 bis 9. Ein Beispiel für einen mehrkanaligen eigensicheren LED-Signalgeber zeigt Figur 11, wobei hier Mehrkanaligkeit bezüglich Abschalter 11a, 11b, Betriebsarterfassung 3a, 3b, Vergleicher 6a, 6b, Signalgenerator/Treiber-Baugruppe 4.1a/4.2a, 4.1b/4.2b, LEDs 7a, 7b, Messwerterfassung 8a, 8b und Auswertung 9a, 9b vorgesehen ist.

## Patentansprüche

1. Signalgeber, der zum Ansteuern einer LED-Lichtquelle (7; 7a, 7b, 7c) und zum Zusammenwirken mit einem Stellwerk (1) ausgebildet ist und
eine Betriebsarterfassung (3; 3a, 3b, 3c), die zum Erfassen einer Soll-Betriebsart, insbesondere bezüglich Tag- oder Nachtbetrieb, ausgebildet ist,
eine EMV-Schutzeinrichtung (2), die zum Eliminieren von unzulässigen Fremdspannungen im Eingangssignal ausgebildet ist,
eine Signalgenerator/Treiber-Baugruppe (4; 4a, 4b; 4.1a, 4.1b, 4.1c, 4.2a, 4.2b, 4.2c), die zum Auswerten von Informationen der Betriebsartenerfassung und Einstellen einer Bestromung für die LED-Lichtquelle ausgebildet ist,
einer Kennlinienanpassung (5; 5a, 5b, 5c), die zum Nachbilden von elektrischen Eigenschaften einer Glühlampe ausgebildet ist,
eine Messwerterfassung (8; 8a, 8b), die zum Ermitteln einer Ist-Betriebsart durch Erfassen von optischen und/oder elektrischen Betriebswerten der LED-Lichtquelle ausgebildet ist,
einem Vergleicher (6; 6a, 6b, 6c), der zum Vergleich der durch die Betriebsarterfassung (3; 3a, 3b, 3c) vorgegebenen Soll-Betriebsart und der mittels der Messwerterfassung (8; 8a, 8b) ermittelten Ist-Betriebsart ausgebildet ist,
und
eine Auswertung (9; 9a, 9b), die zum Bewerten der von der Messwerterfassung ermittelten Betriebswerten ausgebildet ist, umfasst,
wobei
die Betriebsarterfassung (3; 3a, 3b, 3c) eingangsseitig über die EMV-Schutzeinrichtung (2) mit dem Stellwerk (1) und ausgangsseitig mit der Signalgenerator/Treiber-Baugruppe (4; 4a, 4b; 4.1a, 4.1b, 4.1.c, 4.2a, 4.2b, 4.2c) zur Bestromung der LED-Lichtquelle (7; 7a, 7b, 7c), der Kennlinienanpassung (5; 5a, 5b, 5c) und dem Vergleicher (6; 6a, 6b, 6c) verbunden ist, wobei die Messswerterfassung (8; 8a, 8b) außerdem mit der Auswertung (9; 9a, 9b) und der Signalgenerator/Treiber-Baugruppe (4; 4a, 4b; 4.1a, 4.1b, 4.1c, 4.2a, 4.2b, 4.2c) in einen Regelkreis eingebunden ist,
wobei der Vergleicher (6; 6a, 6b, 6c) über einen Rückkanal mit dem Stellwerk (1) verbunden ist und der Signalgeber bei fehlerfreiem Betrieb so ausgebildet ist, dass die Ist-Betriebsart des Rückkanals übereinstimmt mit der Soll-Betriebsart aus der Ansteuerung durch das Stellwerk (1), und die Betriebsarterfassung (3; 3a, 3b, 3c), die EMV-Schutzeinrichtung (2), die Signalgenerator/Treiber-Baugruppe (4; 4a, 4b; 4.1a, 4.1b, 4.1c, 4.2a, 4.2b, 4.2c), die Kennlinienanpassung (5; 5a, 5b, 5c), der Vergleicher (6; 6a, 6b, 6c) und die Messwerterfassung (8; 8a, 8b) signaltechnisch sicher voneinander getrennt ausgebildet sind.

2. Signalgeber nach Anspruch 1,
**dadurch gekennzeichnet, dass**
die Messwerterfassung (8; 8a, 8b) zur Überwachung optischer Parameter des LED-Lichtsignals (7; 7a, 7b, 7c), elektrischer Parameter des LED-Lichtsignals (7; 7a, 7b, 7c) oder elektrischer Parameter der Signalgenerator/Treiber-Baugruppe (4; 4a, 4b; 4.1a, 4.1b, 4.1c, 4.2a, 4.2b, 4.2c) ausgebildet ist.

3. Signalgeber nach einem der vorangehenden Ansprüche,
**dadurch gekennzeichnet, dass**
die Signalgenerator/Treiber-Baugruppe (4) einen Signalgenerator (4.2) aufweist, der mit mehreren Treibern (4.1a, 4.1b, 4.1c) für mehrere LEDs (7a, 7b, 7c) der LED-Lichtquelle (7) verbunden ist.

4. Signalgeber nach Anspruch 1 oder 2,
**dadurch gekennzeichnet, dass**
die Signalgeber/Treiber-Baugruppe (4) mehrere Signalgeneratoren (4.2a, 4.2b, 4.2c) aufweist, die jeweils mit einem Treiber (4.1a, 4.1b, 4.1c) für LEDs (7a, 7b, 7c) der LED-Lichtquelle (7) verbunden sind.

5. Signalgeber nach einem der vorangehenden Ansprüche,
**dadurch gekennzeichnet, dass**
die Betriebsarterfassung (3) mehrkanalig (3a, 3b, 3c) ausgebildet ist.

6. Signalgeber nach Anspruch 5,
**dadurch gekennzeichnet, dass**
die Kennlinienanpassung (5) mehrkanalig (5a, 5b, 5c) ausgebildet ist.

7. Signalgeber nach Anspruch 5,
**dadurch gekennzeichnet, dass**
die Kanäle (3a, 3b, 3c) der Betriebsarterfassung (3) mit einem Voter (10) verbunden sind.

8. Signalgeber nach den Ansprüchen 4 und 5,
**dadurch gekennzeichnet, dass**
die Kanäle (3a, 3b, 3c) der Betriebsarterfassung (3) jeweils mit einem Signalgenerator (4.2a, 4.2b, 4.2c) der Signalgenerator/Treiber-Baugruppe (4; 4.1, 4.2) verbunden sind.

9. Signalgeber nach einem der vorangehenden Ansprüche,
**dadurch gekennzeichnet, dass**
die Messwerterfassung (8) mehrkanalig (8a, 8b) ausgebildet ist.

10. Signalgeber nach einem der vorangehenden Ansprüche,
**dadurch gekennzeichnet, dass**
der Vergleicher (6; 6a, 6b, 6c) ausgangsseitig mit einem Abschalter (11; 11a, 11b) verbunden ist.

## Claims

1. Signal emitter which is embodied for actuating an LED light source (7; 7a, 7b, 7c) and for interacting with a signal box (1) and comprises
an operating mode detection (3; 3a, 3b, 3c) which is embodied for detecting a target operating mode, in particular with respect to day or night operation,
EMC protection equipment (2) which is embodied for eliminating inadmissible interference voltages in the input signal,
a signal generator/driver board (4; 4a, 4b; 4.1a, 4.1b, 4.1c, 4.2a, 4.2b, 4.2c) which is embodied for analysing information of the operating mode detection and adjusting an energisation for the LED light source,
a characteristic curve modification (5; 5a, 5b, 5c) which is embodied for reproducing electrical properties of an incandescent lamp,
a measured value detection (8; 8a, 8b) which is embodied for determining an actual operating mode by detecting optical and/or electrical operating values of the LED light source,
a comparator (6; 6a, 6b, 6c) which is embodied for comparing the target operating mode predefined by the operating mode detection (3; 3a, 3b, 3c) and the actual operating mode determined by means of the measured value detection (8; 8a, 8b), and
an analysis (9; 9a, 9b) which is embodied for evaluating the operating values determined by the measured value detection, wherein
the operating mode detection (3; 3a, 3b, 3c) is connected on the input side via the EMC protection equipment (2) to the signal box (1) and on the output side to the signal generator/driver board (4; 4a, 4b; 4.1a, 4.1b, 4.1c, 4.2a,
4.2b, 4.2c) for energising the LED light source (7; 7a, 7b, 7c), the characteristic curve modification (5; 5a, 5b, 5c) and the comparator (6; 6a, 6b, 6c), wherein the measured value detection (8; 8a, 8b) is additionally integrated into a closed control loop with the analysis (9; 9a, 9b) and the signal generator/driver board (4; 4a, 4b; 4.1a, 4.1b, 4.1c, 4.2a, 4.2b, 4.2c),
wherein the comparator (6; 6a, 6b, 6c) is connected to the signal box (1) via a back channel and the signal emitter is embodied during error-free operation such that the actual operating mode of the back channel matches the target operating mode from the actuation by the signal box (1), and the operating mode detection (3; 3a, 3b, 3c), the EMC protection equipment (2), the signal generator/driver board (4; 4a, 4b; 4.1a, 4.1b, 4.1c, 4.2a, 4.2b, 4.2c), the characteristic curve modification (5; 5a, 5b, 5c), the comparator (6; 6a, 6b, 6c) and the measured value detection (8; 8a, 8b) are embodied so as to be safely separated from one another in terms of signal technology.

2. Signal emitter according to claim 1,
**characterised in that**
the measured value detection (8; 8a, 8b) is embodied for monitoring optical parameters of the LED light signal (7; 7a, 7b, 7c), electrical parameters of the LED light signal (7; 7a, 7b, 7c) or electrical parameters of the signal
generator/driver board (4; 4a, 4b; 4.1a, 4.1b, 4.1c, 4.2a, 4.2b, 4.2c).

3. Signal emitter according to one of the preceding claims,
**characterised in that**
the signal generator/driver board (4) has a signal generator (4.2), which is connected to a plurality of drivers (4.1a, 4.1b, 4.1c) for a plurality of LEDs (7a, 7b, 7c) of the LED light source (7).

4. Signal emitter according to claim 1 or 2,
**characterised in that**
the signal emitter/driver board (4) has a plurality of signal generators (4.2a, 4.2b, 4.2c), which are in each case connected to a driver (4.1a, 4.1b, 4.2c) for LEDs (7a, 7b, 7c) of the LED light source (7).

5. Signal emitter according to one of the preceding claims,
**characterised in that**
the operating mode detection (3) is embodied in a multi-channel manner (3a, 3b, 3c).

6. Signal emitter according to claim 5,
**characterised in that**
the characteristic curve modification (5) is embodied in a multi-channel manner (5a, 5b, 5c).

7. Signal emitter according to claim 5,
**characterised in that**
the channels (3a, 3b, 3c) of the operating mode detection (3) are connected to a voter (10).

8. Signal emitter according to claims 4 and 5,
**characterised in that**
the channels (3a, 3b, 3c) of the operating mode detection (3) are in each case connected to a signal generator (4.2a, 4.2b, 4.2c) of the signal generator/driver board (4; 4.1, 4.2).

9. Signal emitter according to one of the preceding claims,
**characterised in that**
the measured value detection (8) is embodied in a multi-channel manner (8a, 8b).

10. Signal emitter according to one of the preceding claims,
**characterised in that**
the comparator (6; 6a, 6b, 6c) is connected on the output side to a cut-off switch (11; 11a, 11b).

## Revendications

1. Emetteur de signal constitué pour exciter une source (7 ; 7a, 7b, 7c) lumineuse DEL et pour coopérer avec un poste (1) d'aiguillage et
une détection (3; 3a, 3b, 3c) de type de fonctionnement constituée pour détecter un type de fonctionnement de consigne, notamment en ce qui concerne un fonctionnement de jour ou un fonctionnement de nuit,
un dispositif (2) de protection de compatibilité électromagnétique constitué pour éliminer des tensions étrangères inadmissibles dans le signal d'entrée,
un module (4 ; 4a, 4b, 4.1a, 4.1b, 4.1c, 4.2a, 4.2b, 4.2c) générateur de signal/circuit d'attaque constitué pour exploiter des informations de la détection du type de fonctionnement et pour régler une alimentation en courant de la source lumineuse DEL,
une adaptation (5 ; 5a, 5b, 5c) de courbe caractéristique constituée pour reproduire des propriétés électriques d'une lampe à incandescence,
une détection (8 ; 8a, 8b) de valeur de mesure constituée pour déterminer un type de fonctionnement réel par détection de valeurs de fonctionnement optiques et/ou électriques de la source lumineuse DEL,
un comparateur (6 ; 6a, 6b, 6c) constitué pour comparer le type de fonctionnement de consigne prescrit par la détection (3 ; 3a, 3b, 3c) de type de fonctionnement et le type de fonctionnement réel déterminé au moyen de la détection (8 ; 8a, 8b) de valeurs de mesure,
et
une exploitation (9 ; 9a, 9b) constituée pour exploiter les valeurs de fonctionnement déterminées par la détection de valeurs de mesure,
dans lequel
la détection (3 ; 3a, 3b, 3c) du type de fonctionnement est reliée, du côté de l'entrée, par l'intermédiaire du dispositif (2) de protection de compatibilité électromagnétique, au poste (1) d'aiguillage, du côté de la sortie, au module (4; 4a, 4b, 4.1a, 4.1b, 4.1c, 4.2a, 4.2b, 4.2c) de générateur de signaux/circuit d'attaque pour l'alimentation en courant de la source (7; 7a, 7b, 7c) lumineuse DEL, à l'adaptation (5 ; 5a, 5b, 5c) de courbe caractéristique et au comparateur (6 ; 6a, 6b, 6c), la détection (8 ; 8a, 8b) de valeurs de mesure étant incorporée en outre à l'exploitation (9 ; 9a, 9b) et au module (4 ; 4a, 4b, 4.1a, 4.1b, 4.1c, 4.2a, 4.2b, 4.2c) de générateur de signaux/circuit d'attaque en un circuit de régulation,
dans lequel le comparateur (6 ; 6a, 6b, 6c) est relié au poste (1) d'aiguillage par un canal de retour et l'émetteur de signaux est constitué de manière à ce que, dans un fonctionnement sans erreur, le type de fonctionnement du canal de retour coïncide avec le type de fonctionnement de consigne à partir de l'excitation par le poste (1) d'aiguillage, et la détection (3; 3a, 3b, 3c) du type de fonctionnement, le dispositif (2) de protection de compatibilité électromagnétique, le module (4; 4a, 4b, 4.1a, 4.1b, 4.1c, 4.2a, 4.2b, 4.2c) de générateur de signaux/circuit d'attaque, l'adaptation (5 ; 5a, 5b, 5c) de courbe caractéristique, le comparateur (6 ; 6a, 6b, 6c) et la détection (8 ; 8a, 8b) de valeurs de mesure sont constitués de manière séparée les uns des autres en technique de signal.

2. Emetteur de signal suivant la revendication 1,
**caractérisé en ce que**
la détection (8; 8a, 8b) de valeurs de mesure est constituée pour le contrôle de paramètres optiques du signal (7 ; 7a, 7b, 7c) lumineux de DEL, de paramètres électriques du signal (7 ; 7a, 7b, 7c) lumineux de DEL ou de paramètres électriques du module (4 ; 4a, 4b, 4.1a, 4.1b, 4.1c, 4.2a, 4.2b, 4.2c) de générateur de signaux/circuit d'attaque.

3. Emetteur de signal suivant l'une des revendications précédentes,
**caractérisé en ce que**
le module (4) de générateur de signaux/circuit d'attaque a un générateur (4.2) de signaux, qui est relié à plusieurs circuits (4.1a, 4.1b, 4.1c) d'attaque pour plusieurs DEL (7a, 7b, 7c) de la source (7) lumineuse DEL.

4. Emetteur de signal suivant la revendication 1 ou 2,
**caractérisé en ce que**
le module (4) de générateur de signaux/circuit d'attaque a plusieurs générateurs (4.2a, 4.2b, 4.2c) de signaux, qui sont reliés respectivement à un circuit (4.1a, 4.1b, 4.1c) d'attaque pour des DEL (7a, 7b, 7c) de la source (7) lumineuse DEL.

5. Emetteur de signal suivant l'une des revendications précédentes,
**caractérisé en ce que**
la détection (3) du type de fonctionnement est constituée en plusieurs canaux (3a, 3b, 3c).

6. Emetteur de signal suivant la revendication 5,
**caractérisé en ce que**
l'adaptation (5) de courbe caractéristique est constituée en plusieurs canaux (5a, 5b, 5c).

7. Emetteur de signal suivant la revendication 5,
**caractérisé en ce que**
les canaux (3a, 3b, 3c) de la détection (3) du type de fonctionnement sont reliés à un sélectionneur (10).

8. Emetteur de signal suivant les revendications 4 et 5,
**caractérisé en ce que**
les canaux (3a, 3b, 3c) de la détection (3) du type de fonctionnement sont reliés respectivement à un générateur (4.2a, 4.2b, 4.2c) de signaux du module (4 ; 4.1, 4.2) de générateur/circuit d'attaque.

9. Emetteur de signal suivant l'une des revendications précédentes,
**caractérisé en ce que** la détection (8) de valeurs de mesure est constituée en plusieurs canaux (8a, 8b).

10. Emetteur de signal suivant l'une des revendications précédentes,
**caractérisé en ce que** le comparateur (6 ; 6a, 6b, 6c) est relié, du côté de la sortie, à un interrupteur (11 ; 11a, 11b).
